(19) Europäisches Patentamt / European Patent Office / Office européen des brevets

(11) **EP 2 215 580 B1**

(12) **FASCICULE DE BREVET EUROPEEN**

(45) Date de publication et mention de la délivrance du brevet:
**15.02.2012 Bulletin 2012/07**

(21) Numéro de dépôt: **08856161.8**

(22) Date de dépôt: **21.11.2008**

(51) Int Cl.:
***G06F 21/00*** *(2006.01)*

(86) Numéro de dépôt international:
**PCT/FR2008/052106**

(87) Numéro de publication internationale:
**WO 2009/071819 (11.06.2009 Gazette 2009/24)**

(54) **PROCEDE DE MASQUAGE DE PASSAGE EN FIN DE VIE D'UN DISPOSITIF ELECTRONIQUE ET DISPOSITIF COMPORTANT UN MODULE DE CONTROLE CORRESPONDANT**

VERFAHREN ZUR VERBERGUNG DES ERREICHTEN HALTBARKEITSENDES EINER ELEKTRONISCHEN VORRICHTUNG UND VORRICHTUNG MIT EINEM ENTSPRECHENDEN STEUERMODUL

METHOD OF MASKING ATTAINMENT OF END OF LIFETIME OF AN ELECTRONIC DEVICE AND DEVICE COMPRISING A CORRESPONDING CONTROL MODULE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.11.2007 FR 0708242**

(43) Date de publication de la demande:
**11.08.2010 Bulletin 2010/32**

(73) Titulaire: **MORPHO**
**75015 Paris (FR)**

(72) Inventeurs:
• **PELLETIER, Hervé**
  **F-75015 Paris (FR)**
• **DUMAS, Pascal**
  **F-75015 Paris (FR)**

(74) Mandataire: **Cabinet Plasseraud**
**52, rue de la Victoire**
**75440 Paris Cedex 09 (FR)**

(56) Documents cités:
**FR-A- 2 776 410    FR-A- 2 784 763**

**Description**

L'invention concerne un procédé de masquage de passage en fin de vie d'un dispositif électronique, comprenant un port d'entrée-sortie, un microprocesseur, une mémoire vive, une mémoire morte et une mémoire non volatile reprogrammable contenant une variable d'état de fin de vie du dispositif électronique gérée par un module de contrôle.

De tels dispositifs électroniques correspondent, de manière non exclusive, aux cartes électroniques, ou à tout dispositif électronique comportant au moins ou entrant en relation avec, une carte électronique, telle que, notamment, une carte à microprocesseur, pour laquelle une bonne résistance sécuritaire est requise, vis-à-vis de toute intrusion externe.

Pour assurer une bonne résistance sécuritaire des cartes précitées, un mécanisme de passage en fin de vie est activé, sur détection d'un certain nombre d'erreurs critiques.

Le processus de passage en fin de vie de ce type de dispositif, notamment en ce qui concerne les cartes à microprocesseur, apparaît cependant problématique, car un tel processus s'appuie, globalement, sur un processus d'écriture en mémoire reprogrammable non volatile, généralement mémoire EEPROM, ce processus d'écriture ayant pour objet l'effacement des données et le blocage des applications.

Un tel processus apparaît toutefois vulnérable, car il est détectable en dehors de la carte, en raison notamment du fort appel de courant engendré par le processus d'écriture en mémoire reprogrammable et demande en outre un certain temps pour l'exécuter.

Un tiers indélicat dispose donc de tout loisir d'empêcher l'exécution d'un tel processus, en coupant l'alimentation électrique du dispositif ou de la carte.

Les documents FR-27 76 410-A et FR-27 84 763-A divulguent différents mécanismes de masquage d'opérations effectuées dans une carte à microprocesseur.

La présente invention a en conséquence pour objet de rendre le processus de passage en fin de vie d'un tel dispositif électronique totalement certain dans un délai aléatoire après l'évènement, erreur critique, à l'origine du déclenchement de passage en fin de vie, en masquant, notamment à tout tiers, l'opération d'écriture en mémoire non volatile correspondant au passage en fin de vie, ce qui interdit en pratique toute attaque par canal caché.

Selon un aspect remarquable, l'invention a pour objet le masquage de toute écriture d'une variable d'état de passage en fin de vie en mémoire non volatile d'un dispositif électronique, par dilution de cette opération d'écriture dans le déroulement normal du programme d'application exécuté par le dispositif électronique.

Le procédé de masquage de passage en fin de vie d'un dispositif électronique, objet de l'invention, s'applique à tout dispositif électronique comprenant un microprocesseur, une mémoire vive, une mémoire morte, une mémoire non volatile reprogrammable contenant une variable d'état de fin de vie gérée par un module de contrôle et un port d'entrée/sortie.

Il est remarquable en ce que, lors du démarrage du dispositif électronique, il consiste à charger en mémoire vive, à partir de la mémoire non volatile, la valeur de la variable d'état de fin de vie, et, préalablement à l'exécution de toute commande courante par le microprocesseur, vérifier la valeur de cette variable d'état de fin de vie mémorisée en mémoire vive à la valeur non vraie, et, sur réponse négative à cette vérification, exécuter les opérations de passage en fin de vie du dispositif électronique ; sinon, la variable d'état de fin de vie mémorisée en mémoire vive étant à la valeur non vraie, poursuivre l'initialisation ou l'exécution de la commande courante par le microprocesseur du dispositif électronique, et, sur détection d'une attaque intrusive, instancier par écriture, dans la seule mémoire vive, la variable d'état de fin de vie du dispositif électronique à la valeur vraie et poursuivre l'initialisation et/ou l'exécution de la commande courante, et, différer l'écriture de la variable d'état de fin de vie à la valeur vraie dans la mémoire non volatile pour l'effectuer en lieu et place de la prochaine opération d'écriture en mémoire non volatile, ce qui permet de masquer l'inscription de la variable d'état de fin de vie.

Le procédé objet de l'invention est également remarquable en ce qu'il consiste en outre, préalablement à l'exécution de chaque commande par le microprocesseur, à charger en mémoire vive, à partir de la mémoire non volatile, la valeur de la variable d'état de fin de vie.

Le procédé, objet de l'invention, est également remarquable en ce que, pour un ensemble de commandes exécutées par le microprocesseur du dispositif électronique incluant des commandes comprenant une inscription systématique en mémoire non volatile et des commandes ne comprenant pas d'inscription en mémoire non volatile, il consiste en outre, indépendamment de la détection ou de la non détection d'une attaque intrusive, à exécuter l'écriture en mémoire non volatile d'un octet factice, ce qui permet de masquer toute écriture éventuellement de la variable d'état de fin de vie du dispositif électronique en mémoire non volatile.

De préférence, l'opération d'écriture en mémoire non volatile de cet octet factice est exécutée dans la même page mémoire que celle de la variable d'état de fin de vie.

En outre, selon un autre aspect remarquable du procédé objet de l'invention, l'opération d'écriture en mémoire non volatile de cet octet factice est exécutée préalablement à toute exécution d'opération de transmission de données sur la ligne du port d'entrée/sortie du dispositif électronique.

Selon un autre aspect remarquable, le procédé, objet de l'invention, inclut en outre, consécutivement à toute étape d'écriture en mémoire volatile de la variable d'état de fin de vie, une étape consistant à vérifier à la valeur vraie la valeur de la variable d'état de fin de vie, et, sur vérification à cette valeur vraie, une étape d'exécution des opérations de passage en fin de vie du dispositif électronique.

Selon un autre aspect, le procédé objet de l'invention est en outre remarquable en ce que, sur vérification de la valeur de cette variable d'état de fin de vie à la valeur vraie, à l'opération d'écriture en mémoire non volatile de cet octet factice est substituée l'opération d'écriture en mémoire non volatile de la valeur de la variable d'état de fin de vie.

Le dispositif électronique, objet de l'invention, comprend un microprocesseur, une mémoire vive, une mémoire morte, une mémoire non volatile reprogrammable contenant une variable d'état de fin de vie du dispositif électronique gérée par un module de contrôle et un port d'entrée/sortie (I/O). Il est remarquable en ce que ce module de contrôle inclut un module de programme d'ordinateur d'exécution des étapes du procédé objet de l'invention précédemment citées.

Le procédé de masquage de passage en fin de vie d'un dispositif électronique et le dispositif électronique incluant un module de contrôle correspondant, objets de l'invention, trouvent application à tout type de dispositif électronique, mais, de manière préférentielle non limitative, à des dispositifs électroniques tels que les cartes à microprocesseur traitant et/ou stockant des données personnelles, privées ou secrètes.

Ils seront mieux compris à la lecture de la description et à l'observation des figures ci-après, dans lesquelles :

- la figure la représente, à titre purement illustratif, un organigramme des étapes essentielles de mise en oeuvre du procédé objet de l'invention ;
- La figure 1b représente, à titre purement illustratif un chronogramme des différentes étapes exécutées au cours de la mise en oeuvre du procédé objet de l'invention illustré en figure la ;
- Les figures 1c à 1f représentent des détails de mise en oeuvre des étapes de procédé illustré en figure 1a ;
- La figure 2 représente, à titre purement illustratif, sous forme de schéma fonctionnel, l'architecture d'un dispositif électronique muni d'un module de contrôle de passage en fin de vie conforme à l'objet de la présente invention.

Une description plus détaillée du procédé de masquage de passage en fin de vie d'un dispositif électronique, conforme à l'objet de la présente invention, sera maintenant donnée en liaison avec les figures la à 1f.

D'une manière générale, on indique que le procédé de masquage de passage en fin de vie d'une carte électronique, objet de la présente invention, s'applique à tout dispositif électroniques comprenant un microprocesseur, une mémoire vive, une mémoire morte et une mémoire non volatile reprogrammable contenant une variable d'état de fin de vie du dispositif électronique, gérée par un module de contrôle. De manière plus particulière, le dispositif électronique peut comporter également un port d'entrée/sortie permettant l'échange de données soit avec un appareil hôte ou même en réseau, par exemple. La notion de mémoire non volatile reprogrammable couvre les mémoires reprogrammables électriquement, mémoires EEPROM, les mémoires flash, par exemple.

L'appareil électronique précité, lors de son fonctionnement, exécute une phase de démarrage, notée ATR (Answer To Reset en anglais), puis des commandes courantes successives, notées COM.

On comprend, en particulier, que le dispositif électronique correspondant peut avantageusement être constitué par toute carte à microprocesseur, par exemple.

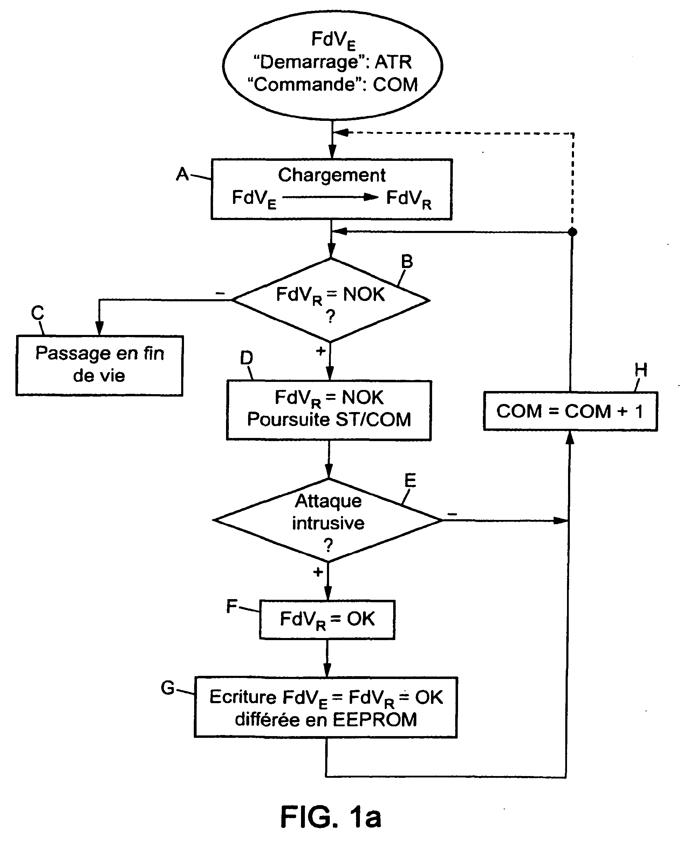

En référence à la figure 1a, le procédé de masquage de passage en fin de vie d'un dispositif électronique, objet de l'invention, comprend une étape A consistant à charger en mémoire vive du dispositif électronique, à partir de la mémoire non volatile de ce dernier, la valeur notée $FdV_E$ de la variable de fin de vie mémorisée en mémoire non volatile.

L'opération correspondante à l'étape A est notée :

$$FdV_E \rightarrow FdV_R$$

.

Dans la relation précédente, $FdV_R$ désigne la valeur de la variable d'état de fin de vie du dispositif électronique chargée en mémoire vive.

Suite à l'étape A de la figure la, et préalablement à l'exécution de toute commande courante COM par le microprocesseur, le procédé objet de l'invention consiste ensuite, en une étape B, à vérifier la valeur de la variable d'état de fin de vie mémorisée en mémoire vive à la valeur non vraie. À l'étape B de la figure 1a, la vérification est représentée par une étape de test :

$$\mathtt{FdV_R \;=\; NOK \;?}$$

Dans cette relation NOK représente la valeur non vraie de la variable d'état de fin de vie du dispositif électronique mémorisée en mémoire vive.

Sur réponse négative au test de l'étape B, le procédé objet de l'invention consiste à exécuter C les opérations de passage en fin de vie du dispositif électronique.

Au contraire sur réponse positive au test exécuté à l'étape B, la variable d'état de fin de vie mémorisée en mémoire vive FdVR étant à la valeur non vraie NOK, le procédé objet de l'invention consiste à poursuivre l'initialisation ou l'exécution de la commande courante COM par le microprocesseur du dispositif électronique. On indique que l'exécution de la commande courante correspond à toute commande d'une application exécutée par le dispositif électronique.

Au cours de cette exécution et sur détection, à une étape E, d'une attaque intrusive, le procédé objet de l'invention consiste, en une étape F, à instancier par écriture dans la seule mémoire vive la variable d'état de fin de vie du dispositif électronique, la variable $FdV_R$, à la valeur vraie et à poursuivre l'initialisation et/ou l'exécution de la commande courante COM.

A l'étape F de la figure 1a l'opération d'instanciation est notée par la relation :

$$FdV_R = OK.$$

Dans la relation précédente, on indique que la valeur OK désigne la valeur vraie de la variable d'état de fin de vie mémorisée en mémoire vive.

Enfin l'étape d'instanciation F précitée est suivie d'une étape G consistant à différer l'écriture de la variable d'état de fin de vie $FdV_E$ à la valeur vraie dans la mémoire non volatile, pour l'effectuer en lieu et place de la prochaine opération d'écriture en mémoire non volatile. Ceci permet de masquer l'inscription de la variable d'état de fin de vie.

On comprend bien entendu que l'étape G précitée est suivie d'un retour à l'exécution de la commande courante suivante par l'intermédiaire de l'étape H. À l'étape précitée, COM+1 désigne la commande suivante.

Ainsi que représenté sur la figure 1a, le retour est effectué à L'Étape B pour la simple exécution de la commande suivante.

Toutefois, selon une autre possibilité de mise en oeuvre du procédé objet de l'invention, le retour peut être effectué, ainsi que représenté en pointillé au dessin de la figure la, en amont du chargement exécuté à l'étape A, pour renouvellement du processus de chargement en mémoire vive de la valeur de la variable d'état de fin de vie $FdV_E$ de manière systématique. Un tel processus n'est toutefois pas indispensable mais peut être mis en oeuvre en variante.

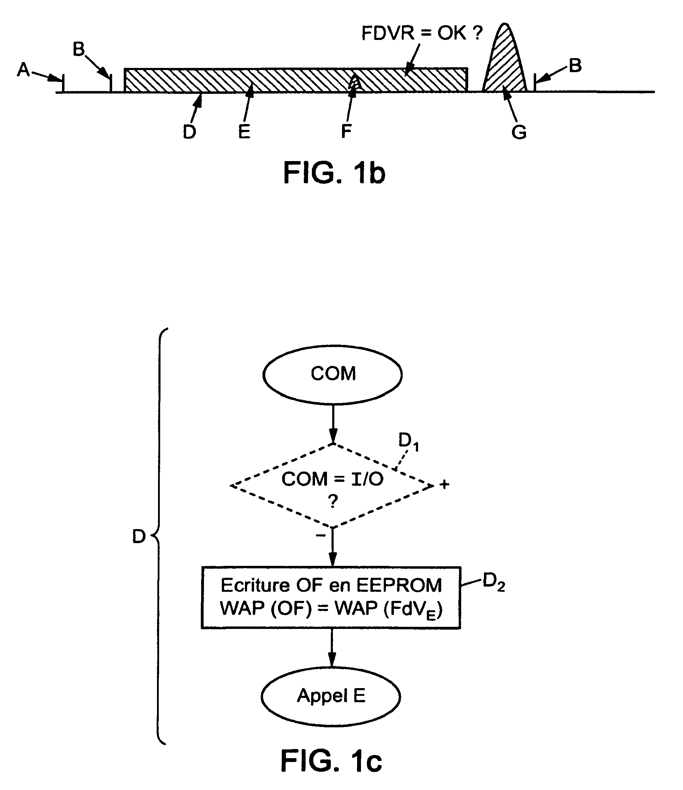

Sur la figure 1b, on a représenté un chronogramme des opérations d'exécution des étapes de la figure 1a.

En particulier, l'étape A peut être exécutée au démarrage ATR ou préalablement à l'exécution de chaque commande COM, ainsi que mentionné précédemment.

Le test de l'étape B est exécuté préalablement à la poursuite du démarrage ou de l'exécution de la commande courante représentée en hachures à gauche sur la figure 1a. On rappelle que la réponse négative au test de l'étape B amène automatiquement le passage en fin de vie du dispositif électronique à l'étape C.

La poursuite du démarrage ou de l'initialisation ou encore de l'exécution de la commande courante à l'étape D correspond en fait à la mise en oeuvre de processus algorithmiques manipulant des secrets pour le dispositif électronique, lorsque ce dernier est constitué par une carte à microprocesseur par exemple.

Le test de l'étape E correspondant à un test de détection d'attaque intrusive peut être mis en oeuvre de manière classique soit par l'exécution de mécanismes anti-DFA (Differential Fault Analysis en anglais, procédé d'attaque consistant à introduire une erreur dans un traitement pour en déduire des informations sur les données traitées) soit par des processus de vérification de l'intégrité des données par exemple.

L'étape d'instanciation de la variable d'état de fin de vie du dispositif électronique par écriture dans la seule mémoire vive, étape F, est exécutée par le module de contrôle du passage en fin de vie du dispositif électronique et opère par écriture de cette variable d'état à la valeur vraie selon la relation précédemment mentionnée :

$$FdV_R = OK.$$

L'étape G consistant en la mise à jour de la variable d'état de fin de vie $FdV_E$ en mémoire non volatile, c'est-à-dire le plus souvent en mémoire EEPROM, est alors exécutée de manière différée, c'est-à-dire en lieu et place de la prochaine écriture à effectuer dans la commande.

Sur la figure 1b, cette opération est représentée par un pic en hachures à droite illustrant l'augmentation de l'intensité de courant consommé par la mémoire précitée en raison de l'opération d'inscription dans la mémoire précitée.

L'étape E est alors suivie d'une étape de retour soit à l'étape B, soit à l'étape A, ainsi que décrit précédemment en liaison avec la figure 1a.

D'une manière plus spécifique, on indique que la valeur non vraie, notée NOK, de la variable d'état de fin de vie du dispositif électronique a une valeur numérique arbitraire. La valeur vraie OK de la variable d'état de fin de vie est au contraire toute valeur numérique distincte de la valeur numérique arbitraire précitée.

Ainsi qu'on l'a en outre représenté en figure 1c, on considère tout ensemble de commandes exécutées par le microprocesseur du dispositif électronique incluant des commandes ($COM_w$) comprenant une inscription systématique en mémoire non volatile et des commandes ($COM_{\overline{w}}$) ne comprenant pas d'inscription en mémoire non volatile. Dans cette hypothèse, le procédé objet de l'invention consiste, indépendamment de la détection ou de la non détection d'une attaque intrusive, à exécuter l'écriture $D_2$ en mémoire non volatile d'un octet factice, lequel est noté OF. Ceci permet de masquer toute écriture éventuelle de la variable d'état de fin de vie du dispositif électronique en mémoire non volatile.

De préférence, l'écriture de l'octet factice OF est exécutée dans la même page mémoire que celle de la variable d'état de fin de vie.

À l'étape $D_2$ représentée en figure 1c l'opération d'écriture dans la même page mémoire est représentée par la relation :

$$\mathtt{WAP(OF)\ =\ WAP(FdVE).}$$

Dans la relation précédente WAP désigne l'adresse de la page mémoire d'écriture.

L'étape D2 est suivie de l'appel de l'étape E de la figure 1a.

En outre, ainsi que représenté sur la même figure 1c, l'opération d'écriture en mémoire non volatile de l'octet factice est exécutée préalablement à toute opération de transmission de données sur la ligne du port d'entrée/sortie du dispositif électronique. Sur la figure 1lc l'opération correspondante est représentée de manière symbolique par la détection de toute opération d'entrée/sortie par la relation :

$$\mathtt{COM\ =\ I/O\ ?}$$

La détection d'une telle opération provoque alors l'écriture systématique et immédiate de l'octet factice, ainsi que décrit précédemment dans la description.

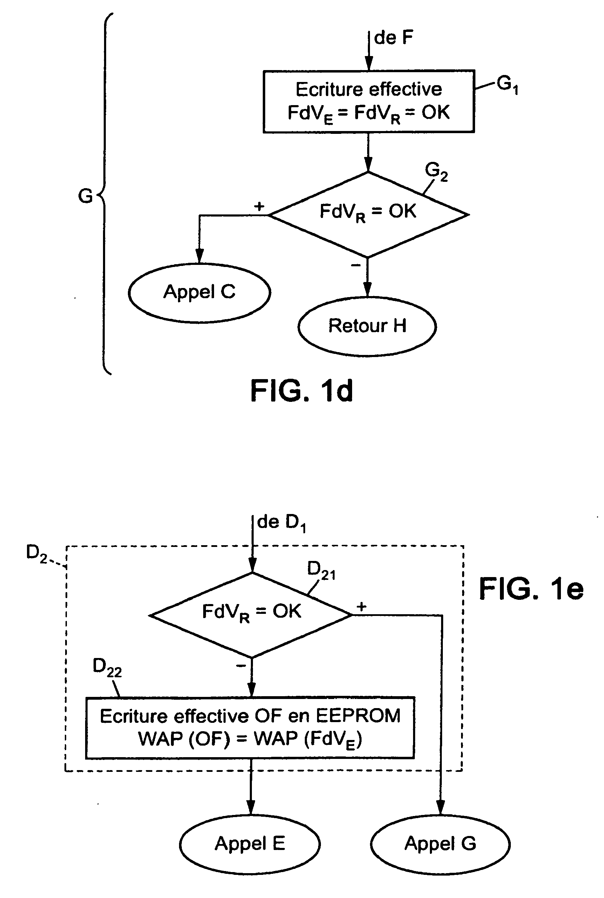

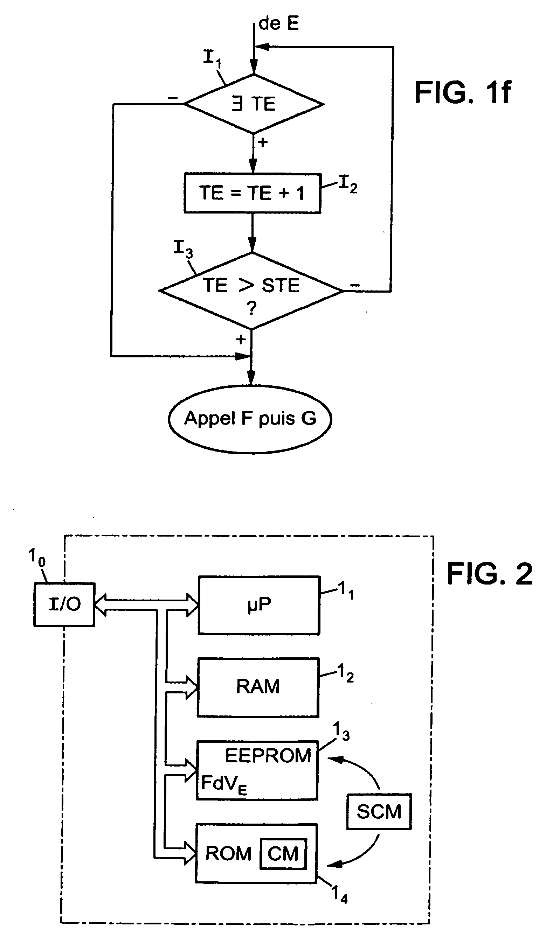

Enfin, ainsi que représenté en figure 1 d, le procédé objet de l'invention inclut avantageusement, consécutivement à toute étape d'écriture en mémoire non volatile de la variable d'état de fin de vie telle que représentée à l'étape G1, une étape notée G2 consistant à vérifier à la valeur vraie la valeur de la variable d'état de fin de vie $FdV_R$ mémorisée en mémoire vive. L'opération correspondante à l'étape précitée est notée selon la relation :

$$\mathtt{FdV_R\ =\ OK.}$$

Sur vérification à la valeur vraie de la variable d'état de fin de vie, une étape d'exécution des opérations de passage en fin de vie du dispositif électronique est effectuée par appel de l'étape C représentée en figure 1a.

Au contraire, en l'absence de vérification à la valeur vraie de la variable d'état de fin de vie, un retour à l'étape H est effectué.

En outre, ainsi qu'on l'a également représenté en figure le, sur vérification à l'étape $D_{21}$ de la valeur de la variable d'état de fin de vie $FdV_R$ à la valeur vraie, soit sur réponse positive au test $D_{21}$ précité, à l'opération d'écriture en mémoire non volatile de l'octet factice OF, représentée à l'étape $D_{22}$ de la figure 1e, est substituée l'écriture en mémoire EEPROM de la valeur de la variable d'état de fin de vie FdVE par appel de l'étape G de la figure 1a.

Le procédé objet de l'invention permet en outre la mise en oeuvre d'un compteur d'erreur.

D'une manière générale, la mise à jour d'un compteur d'erreur est soumise à la même restriction que l'écriture d'une variable de fin de vie.

En raison du fait qu'il s'agit d'une écriture en mémoire non volatile, de type EEPROM, une telle écriture est normalement détectable en raison de la surintensité consommée par cette dernière au cours de l'opération d'écriture.

Le procédé objet de l'invention peut donc permettre de manière avantageuse, dans le cas de détection d'erreurs ne justifiant pas un passage direct en fin de vie, l'implémentation d'un compteur avant d'effectuer l'écriture normale. La valeur de ce compteur est ensuite régulièrement vérifiée et le dépassement d'une valeur de seuil permet de déclencher alors un passage en fin de vie.

Un tel mode opératoire est représenté en figure 1f, de la manière suivante :

-- sur détection $I_1$ d'une erreur d'exécution temporaire d'une instruction, distincte d'une attaque intrusive et ne justifiant pas d'un passage en fin de vie du dispositif électronique, la détection de l'erreur temporaire étant désignée $\exists$ TE ? , où TE désigne l'erreur d'exécution temporaire précitée, la réponse positive au test $I_1$ appelle une étape $I_2$ de mise à jour par implémentation d'un compteur d'erreur en mémoire vive.

La valeur mise à jour à l'étape $I_2$ représentée par la relation :
TE = TE + 1 est alors suivie d'une étape de comparaison $I_3$ de la valeur de comptage des valeurs mises à jour à une valeur de seuil, notée STE.

À l'étape de test $I_3$ l'opération de comparaison est notée :

$$TE > STE ?$$

Sur dépassement de la valeur de seuil par la valeur de comptage d'erreur actualisée, c'est-à-dire sur réponse positive au test $I_3$, l'écriture de la valeur de la variable d'état de fin de vie du dispositif électronique à la valeur vraie et le passage en fin de vie sont effectués par appel de l'étape F puis G, ainsi que représenté en figure 1f.

Un dispositif électronique comportant un microprocesseur noté $1_1$, une mémoire vive notée $1_2$, une mémoire non volatile de type EEPROM par exemple, notée $1_3$, et une mémoire morte notée $1_4$ est maintenant décrit en liaison avec la figure 2. En outre, ainsi que représenté sur la figure précitée, le dispositif comprend un port d'entrée sortie noté I/O.

Ainsi qu'on l'a représenté sur la figure 2, le dispositif électronique en fonctionnement comporte une variable d'état de fin de vie de ce dispositif électronique, notée $FdV_E$, gérée par un module de contrôle CM lequel peut par exemple être un module logiciel implanté en mémoire morte $1_4$.

Le module de contrôle CM inclut un module de programmes d'ordinateur SCM permettant bien entendu l'exécution des étapes du procédé de masquage de passage en fin de vie d'un dispositif électronique, ainsi que précédemment décrits en liaison avec les figures la à 1f.

Bien entendu, le module de programme d'ordinateur SCM peut être implanté en mémoire non volatile de type EEPROM, laquelle constitue un support de mémorisation. Ce module de programme d'ordinateur inclut une suite d'instructions exécutables par le microprocesseur du dispositif électronique et, lors de l'exécution des instructions précitées, exécute les étapes de mise en oeuvre du procédé, tel que décrit précédemment en liaison avec les figures la à 1f.

Le procédé de masquage de passage en fin de vie d'un dispositif électronique, objet de l'invention, a été mis en oeuvre sur des cartes électroniques. Des tests très poussés exécutés sur ces cartes électroniques par des entités de confiance indépendantes n'ont pas permis d'empêcher le passage en fin de vie de ces cartes électroniques, contrairement aux cartes électroniques munies de processus de passage en fin de vie classique, pour lesquelles il est possible de répéter des attaques intrusives jusqu'à la mise en évidence d'une faille exploitable. En conséquence, il apparaît que le procédé objet de l'invention ne permet plus de différencier à temps le cas où une attaque a été détectée et va donc entraîner un passage en fin de vie du dispositif électronique du cas où l'attaque n'a pas été détectée ou n'a produit aucun effet.

**Revendications**

1. Procédé de masquage de passage en fin de vie d'un dispositif électronique comprenant un microprocesseur, une mémoire vive, une mémoire morte, une mémoire non volatile reprogrammable contenant une variable d'état de fin de vie du dispositif électronique gérée par un module de contrôle et un port d'entrée/sortie, **caractérisé en ce que** ledit procédé consiste au moins, lors du démarrage (ATR) du dispositif électronique, à :

   - charger (A) en mémoire vive, à partir de ladite mémoire non volatile, la valeur ($FdV_E$) de ladite variable d'état de fin de vie ; et, préalablement à l'exécution de toute commande courante par ledit microprocesseur ;
   - vérifier (B) la valeur de ladite variable d'état de fin de vie mémorisée en mémoire vive ($FdV_R$) à la valeur non vraie ; et, sur réponse négative à cette vérification ;
   - exécuter (C) les opérations de passage en fin de vie du dispositif électronique ; sinon, ladite variable d'état de fin de vie mémorisée en mémoire vive ($FdV_R$) étant à la valeur non vraie,
   - poursuivre (D) l'initialisation ou l'exécution de la commande courante (COM) par le microprocesseur du dispositif électronique ; et, sur détection (E) d'une attaque intrusive,
   - instancier (F) par écriture, dans la seule mémoire vive, ladite variable d'état de fin de vie du dispositif électronique ($FdV_R$) à la valeur vraie et poursuivre l'initialisation et/ou l'exécution de la commande courante ; et
   - différer (G) l'écriture de la variable d'état de fin de vie ($FdV_E$) à la valeur vraie dans ladite mémoire non volatile pour l'effectuer en lieu et place de la prochaine opération d'écriture en mémoire non volatile dans la commande, ce qui permet de masquer l'inscription de ladite variable d'état de fin de vie.

2. Procédé selon la revendication 1, **caractérisé en ce que** la valeur non vraie ($FdV_R$=NOK) de ladite variable d'état de fin de vie du dispositif électronique est une valeur numérique arbitraire et **en ce que** la valeur vraie ($FdV_R$ = OK) de ladite variable d'état de fin de vie du dispositif électronique est toute valeur numérique distincte de ladite valeur numérique arbitraire.

3. Procédé selon l'une des revendications précédentes, **caractérisé en ce que** pour un ensemble de commandes exécutées par le microprocesseur du dispositif électronique ($COM \in \{COM_w, COM_{\overline{w}}\}$) incluant des commandes ($COM_w$) comprenant une inscription systématique en mémoire non volatile et des commandes ($COM_{\overline{w}}$) ne comprenant pas d'inscription en mémoire non volatile, ledit procédé consiste en outre, indépendamment de la détection ou de la non détection d'une attaque intrusive, à exécuter l'écriture en mémoire non volatile d'un octet factice, ce qui permet de masquer toute écriture éventuelle de la variable d'état de fin de vie du dispositif électronique en mémoire non volatile.

4. Procédé selon la revendication 3, **caractérisé en ce que** celui-ci consiste à exécuter l'écriture dudit octet factice dans la même page mémoire que celle de ladite variable d'état de fin de vie.

5. Procédé selon l'une des revendications 3 ou 4, **caractérisé en ce que**, ladite opération d'écriture en mémoire non volatile dudit octet factice est exécutée préalablement à toute exécution d'opération de transmission de données sur la ligne du port d'entrée/sortie du dispositif électronique à microprocesseur.

6. Procédé selon la revendication 5, **caractérisé en ce que**, sur vérification de la valeur de ladite variable d'état de fin de vie ($FdV_R$) à la valeur vraie, à ladite opération d'écriture en mémoire non volatile dudit octet factice est substituée l'opération d'écriture en mémoire non volatile de la valeur de la variable d'état de fin de vie ($FdV_E$) :

7. Procédé selon l'une des revendications 3 à 6, **caractérisé en ce que** celui-ci inclut en outre, consécutivement à toute étape d'écriture en mémoire non volatile de la variable d'état de fin de vie ($FdV_E$) une étape consistant à vérifier à la valeur vraie, la valeur de ladite variable d'état de fin de vie, mémorisée en mémoire vive (FdVr), et, sur vérification à la valeur vraie, une étape d'exécution des opérations de passage en fin de vie du dispositif électronique.

8. Procédé selon l'une des revendications précédentes, **caractérisé en ce que**, sur détection d'une erreur d'exécution temporaire d'une instruction distincte d'une attaque intrusive ne justifiant pas d'un passage en fin de vie du dispositif électronique, ledit procédé inclut en outre,

   - la mise à jour par incrémentation d'un compteur d'erreur en mémoire vive ;
   - la comparaison de la valeur de comptage d'erreur à une valeur de seuil ; et, sur dépassement de ladite valeur de seuil par ladite valeur de comptage d'erreur,
   - l'écriture de la valeur de ladite variable d'état de fin de vie du dispositif électronique à la valeur vraie et le passage en fin de vie du dispositif électronique.

9. Dispositif électronique comprenant un microprocesseur, une mémoire vive, une mémoire morte, une mémoire non volatile reprogrammable, contenant une variable d'état de fin de vie du dispositif électronique ($FdV_E$) gérée par un module de contrôle et un port d'entrée sortie, **caractérisé en ce que** ledit module de contrôle inclut un module de programme d'ordinateur (SCM) d'exécution des étapes du procédé selon l'une des revendications 1 à 8 ;

10. Produit de programme d'ordinateur mémorisé sur un support de mémorisation et incluant une suite d'instructions exécutables par un ordinateur ou par le microprocesseur d'un dispositif électronique, **caractérisé en ce que**, lors de l'exécution desdites instructions, ledit programme exécute les étapes du procédé selon l'une des revendications 1 à 8.

**Claims**

1. A method of masking the end-of-life transition of an electronic device comprising a microprocessor, RAM, ROM, a reprogrammable non-volatile memory containing an end-of-life state variable of the electronic device controlled by a control module, and an input/output port, the method being **characterized in that** said method consists, on booting (ATR) of the electronic device, at least in:

• loading (A) the value (FdV$_E$) of said end-of-life state variable into RAM from said non-volatile memory; and prior to executing any current command by said microprocessor;

• verifying (B) whether the value of said end-of-life state variable (FdV$_R$) stored in RAM is false; and, if said verification gives a negative response;

• executing (C) the end-of-life transition operations for the electronic device; else, with the value of said end-of-life state variable (FdV$_R$) stored in RAM being false;

• continuing (D) with initialization or execution of the current command (COM) by the microprocessor of the electronic device; and, on detecting (E) an intrusive attack,

• instantiating (F) by writing the value TRUE to said end-of-life state variable (FdV$_R$) of the electronic device in RAM only and continuing the initialization and/or execution of the current command; and

• deferring (G) writing of the value TRUE to the end-of-life state variable (FdV$_E$) in said non-volatile memory so as to perform said write operation as a replacement for the next operation of writing to non-volatile memory in the command, thereby enabling the writing of said end-of-life state variable to be masked.

2. A method according to claim 1, **characterized in that** the FALSE value (FdV$_R$ = NOK) of said end-of-life state variable of the electronic device is an arbitrary numerical value and **in that** the TRUE value (FdV$_R$ = OK) of said end-of-life state variable of the electronic device is any numerical value other than said arbitrary numerical value.

3. A method according to either preceding claim, **characterized in that** for a set of commands executed by the microprocessor of the electronic device (COM $\in \{COM_w, COM_{\overline{w}}\}$) including commands ($COM_w$) that systematically involve writing in non-volatile memory and commands ($COM_{\overline{w}}$) that do not involve writing in non-volatile memory, said method further consists, independently of detecting or not detecting an intrusive attack, in writing a dummy byte in non-volatile memory, thereby enabling any writing of the end-of-life state variable of the electronic device in non-volatile memory to be masked.

4. A method according to claim 3, **characterized in that** it consists in writing said dummy byte in the same memory page as the page occupied by said end-of-life state variable.

5. A method according to claim 3 or claim 4, **characterized in that** said operation of writing said dummy byte in non-volatile memory is performed prior to executing any operation of transmitting data over the line of the input/output port of the microprocessor electronic device.

6. A method according to claim 5, **characterized in that**, on verifying that said end-of-life state variable (FdV$_R$) has the TRUE value, said operation of writing said dummy byte in the non-volatile memory is replaced by the operation of writing the value of the end-of-life state variable (FdV$_E$) in the non-volatile memory.

7. A method according to any one of claims 3 to 6, **characterized in that** the method further includes, consecutively with any step of writing the end-of-life state variable (FdV$_E$) in the non-volatile memory, a step that consists in verifying whether the value of said end-of-life state variable (FdV$_R$) as stored in RAM is true, and if it is true, a step of executing the end-of-life transition operations for the electronic device.

8. A method according to any preceding claim, **characterized in that**, on detecting a temporary execution error for an instruction other than an intrusive attack, the error not justifying an end-of-life transition for the electronic device, said method further includes:

• updating an error counter in RAM by incrementing it;

• comparing the error count value with a threshold value; and if said threshold value has been crossed by said error count value;

• writing the TRUE value to said end-of-life state variable of the electronic device and triggering the end-of-life transition of the electronic device.

9. An electronic device comprising a microprocessor, RAM, ROM, a reprogrammable non-volatile memory containing an end-of-life state variable (FdV$_E$) of the electronic device controlled by a control module, and an input/output port, the device being **characterized in that** said control module includes a computer program module (SCM) for executing the steps of the method according to any one of claims 1 to 8.

10. A computer program product stored on a storage medium and including a sequence of instructions executable by a computer or by the microprocessor of an electronic device, the product being **characterized in that** on executing said instructions said program executes the steps of the method according to any one of claims 1 to 8.

**Patentansprüche**

1. Verfahren zur Maskierung eines Übergangs zum Lebensende einer elektronischen Vorrichtung, die einen Mikroprozessor, einen Arbeitsspeicher, einen Lesespeicher, einen umprogrammierbaren Festspeicher, der eine Variable des Lebensendezustandes der elektronischen Vorrichtung aufweist, die von einem Steuermodul und einem Eingangs- / Ausgangsport gesteuert wird, aufweist,

   **dadurch gekennzeichnet, dass**

   das Verfahren mindestens während des Anschaltens (ATR) der elektronischen Vorrichtung aus folgenden Schritten besteht:

   - Laden (A) des Wertes ($FDV_E$) der Variable des Lebensendezustandes von dem Festspeicher aus in den Arbeitsspeicher; und im Vorfeld der Ausführung jeglichen aktuellen Befehls durch den Mikroprozessor;
   - Überprüfen (B) des Wertes der Variable des Lebensendezustandes, die im Arbeitsspeicher ($FdV_R$) gespeichert ist, auf den Falschwert; und bei negativer Antwort auf dieses Überprüfen;
   - Ausführen (C) der Operationen des Übergangs zum Lebensende der elektronischen Vorrichtung; andernfalls, wenn die Variable des Lebensendezustandes, die im Arbeitsspeicher ($FdV_R$) gespeichert ist, den Falschwert hat,
   - Fortsetzen (D) der Initialisierung oder der Ausführung des aktuellen Befehls (COM) durch den Mikroprozessor der elektronischen Vorrichtung; und bei Detektion (E) eines Zugriffs,
   - mittels Schreiben auf den einzigen Arbeitsspeicher, Instantiieren (F) der Variable des Lebensendezustandes der elektronischen Vorrichtung ($FdV_R$) auf den Falschwert und Fortsetzen der Initialisierung und / oder der Ausführung des aktuellen Befehls; und
   - Verzögern (G) des Umschreibens der Variable des Lebensendezustandes ($FDV_E$) auf den Falschwert in den Festspeicher, um das Umschreiben anstelle von der im Befehl nächsten Schreiboperation in den Festspeicher auszuführen, was ermöglicht, die Einschreibung der Variable des Lebensendezustandes zu maskieren.

2. Verfahren nach Anspruch 1, **dadurch gekennzeichnet, dass** der Falschwert ($FdV_R$=NOK) der Variable des Lebensendezustandes der elektronischen Vorrichtung ein beliebiger numerischer Wert ist, und dass der Wahrwert ($FdV_R$=OK) der Variable des Lebensendezustandes der elektronischen Vorrichtung jeden numerischen Wert annimmt, der sich von dem beliebigen numerischen Wert unterscheidet.

3. Verfahren nach einem der vorherigen Ansprüche, **dadurch gekennzeichnet, dass**, für eine Einheit von Befehlen, die vom Mikroprozessor der elektronischen Vorrichtung (COM $\in$ {$COM_w$, $COM_{\overline{w}}$}) ausgeführt werden, wobei die Einheit Befehle ($COM_w$), die eine systematische Einschreibung in den Festspeicher aufweisen, und Befehle ($COM_{\overline{w}}$), die keine systematische Einschreibung in den Festspeicher aufweisen, aufweist, das Verfahren des weiteren darin besteht, das Schreiben in den Festspeicher eines unechten Bytes auszuführen, unabhängig von der Detektion oder Nichtdetektion eines Zugriffs, wodurch ermöglicht wird, jegliches mögliches Schreiben der Variable des Lebensendezustandes der elektronischen Vorrichtung in den Festspeicher zu maskieren.

4. Verfahren nach Anspruch 3, **dadurch gekennzeichnet, dass** das Verfahren darin besteht, das Schreiben des unechten Bytes in demselben Speicherbereich durchzuführen wie dem Speicherbereich der Variable des Lebensendezustandes.

5. Verfahren nach einem der Ansprüche 3 oder 4, **dadurch gekennzeichnet, dass** die Schreiboperation des unechten Bytes in den Festspeicher vor jeglicher Ausführung einer Übertragungsoperation von Daten über die Leitung des Eingangs- / Ausgangsports der elektronischen Vorrichtung auf den Mikroprozessor ausgeführt wird.

6. Verfahren nach Anspruch 5, **dadurch gekennzeichnet, dass** nach Überprüfung des Wertes der Variable des Lebensendezustandes ($FdV_R$) auf den Wahrwert, die Schreiboperation des Wertes der Variable des Lebensendezustandes ($FdV_E$) in den Festspeicher durch die Schreiboperation des unechten Bytes in den Festspeicher substituiert wird.

7. Verfahren nach einem der Ansprüche 3 bis 6, **dadurch gekennzeichnet, dass** das Verfahren des weiteren im Anschluss an jeglichen Schreibschritt der Variable des Lebensendezustandes ($FdV_E$) in den Festspeicher einen Schritt aufweist, der darin besteht, den Wert der Variable des Lebensendezustandes, die im Arbeitsspeicher ($FdV_r$) gespeichert ist, auf den Wahrwert zu überprüfen, und nach Überprüfung auf den Wahrwert einen Ausführungsschritt der Operationen des Übergangs zum Lebensende der elektronischen Vorrichtung aufweist.

8. Verfahren nach einem der vorherigen Ansprüche, **dadurch gekennzeichnet, dass**, bei Detektion eines temporären Ausführfehlers eines Befehls, der sich von einem Zugriff unterscheidet, wobei der Ausführfehler nicht einen Übergang zum Lebensende der elektronischen Vorrichtung rechtfertigt, das Verfahren außerdem beinhaltet,

   - Aktualisierung durch Inkrementierung eines Fehlerzählers im Arbeitsspeicher;
   - Vergleich des Wertes der Fehlerzählung mit einem Grenzwert; und bei Überschreiten des Grenzwertes durch den Wert der Fehlerzählung,
   - Umschreiben des Wertes der Variable des Lebensendezustandes der elektronischen Vorrichtung auf den Wahrwert und Übergang zum Lebensende der elektronischen Vorrichtung.

9. Elektronische Vorrichtung, die einen Mikroprozessor, einen Arbeitsspeicher, einen Lesespeicher, einen umprogrammierbaren Festspeicher, der eine Variable des Lebensendezustandes der elektronischen Vorrichtung aufweist, die von einem Steuermodul und einem Eingangs- / Ausgangsport gesteuert wird, aufweist,
   **dadurch gekennzeichnet, dass**
   das Steuermodul ein Computerprogrammmodul (SCM) zur Ausführung der Schritte des Verfahrens nach einem der Ansprüche 1 bis 8 aufweist.

10. Computerprogrammprodukt, das auf einem Datenträger gespeichert ist und das eine Abfolge von von einem Computer oder vom Mikroprozessor der elektronischen Vorrichtung ausführbaren Befehlen aufweist,
   **dadurch gekennzeichnet, dass**,
   während der Ausführung der Befehle, das Programm die Schritte des Verfahrens nach einem der Ansprüche 1 bis 8 ausführt.

FdV$_E$
"Demarrage": ATR
"Commande": COM

A — Chargement
FdV$_E$ ⟶ FdV$_R$

B — FdV$_R$ = NOK ?

C — Passage en fin de vie

D — FdV$_R$ = NOK
Poursuite ST/COM

H — COM = COM + 1

E — Attaque intrusive ?

F — FdV$_R$ = OK

G — Ecriture FdV$_E$ = FdV$_R$ = OK
différée en EEPROM

**FIG. 1a**

FDVR = OK ?

FIG. 1b

COM

$D_1$

COM = I/O ?

+

−

Ecriture OF en EEPROM
WAP (OF) = WAP (FdV$_E$)

$D_2$

Appel E

D

FIG. 1c

de F

Ecriture effective
$FdV_E = FdV_R = OK$ — $G_1$

$G$

$G_2$

$FdV_R = OK$

+

Appel C

−

Retour H

**FIG. 1d**

de $D_1$

$D_2$

$D_{21}$

$FdV_R = OK$

+

**FIG. 1e**

$D_{22}$

−

Ecriture effective OF en EEPROM
$WAP (OF) = WAP (FdV_E)$

Appel E

Appel G

FIG. 1f

de E

$I_1$

∃ TE

$-$

$+$

TE = TE + 1 — $I_2$

$I_3$

TE > STE ?

$-$

$+$

Appel F puis G

FIG. 2

$1_0$

I/O

µP — $1_1$

RAM — $1_2$

EEPROM — $1_3$
FdV$_E$

SCM

ROM CM

$1_4$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2776410 A
- FR 2784763 A